# EUROPÄISCHE PATENTSCHRIFT

(11) **EP 3 362 820 B1**
(45) Veröffentlichungstag und Bekanntmachung des Hinweises auf die Patenterteilung: **16.03.2022**
(21) Anmeldenummer: 16782024.0
(22) Anmeldetag: 07.10.2016
(51) Int. Cl.: G01T 1/20

(54) **DETEKTORELEMENT ZUR ERFASSUNG VON EINFALLENDER RÖNTGENSTRAHLUNG**
DETECTOR ELEMENT FOR DETECTING INCIDENT X-RAY RADIATION
ÉLÉMENT DÉTECTEUR DESTINÉ À LA DÉTECTION DE RAYONS X INCIDENTS

(30) Priorität: 11.11.2015 DE 102015222268
(43) Veröffentlichungstag der Anmeldung: 22.08.2018
(73) Patentinhaber: Siemens Healthcare GmbH, 91052 Erlangen (DE); Friedrich-Alexander-Universität Erlangen-Nürnberg, 91054 Erlangen (DE)
(72) Erfinder: BRABEC, Christoph, 90403 Nürnberg (DE); RICHTER, Moses, 91054 Erlangen (DE); MATT, Gebhard, 91058 Erlangen (DE)
(86) Internationale Anmeldenummer: PCT/EP2016/074007
(87) Internationale Veröffentlichungsnummer: WO 2017/080728

(56) Entgegenhaltungen:
- EP-A2- 1 209 488
- WO-A1-2015/158646
- WO-A2-2012/062625
- DE-A1-102012 206 180
- DE-A1-102014 212 424

## Beschreibung

Die Erfindung betrifft ein Detektorelement zur Erfassung von einfallender Röntgenstrahlung, mit einer Szintillationsschicht zur Wandlung der Röntgenstrahlung in Szintillationslicht und mit einem fotoaktiven Element zur Wandlung des Szintillationslichts in ein elektrisches Signal.

In der Materialanalyse, bei Sicherheits- und Qualitätskontrollen, sowie in der Medizintechnik werden bildgebende Röntgendetektoren zur ortsaufgelösten Erfassung von Röntgenstrahlung eingesetzt. Ein derartiger Röntgendetektor umfasst typischerweise eine Anzahl an pixelartigen Detektorelementen, die beispielsweise als zweidimensionales Detektorarray angeordnet sind.

Es gibt direkt-wandelnde Detektorelemente und indirektwandelnde Detektorelemente. Während ein direkt-wandelndes Detektorelement die auftreffende Röntgenstrahlung unmittelbar in ein elektrisches Signal umwandelt, wird bei einem indirekt-wandelnden Detektorelement die Röntgenstrahlung zunächst in - im Vergleich zu Röntgenstrahlung niederenergetische - elektromagnetische Strahlung im sichtbaren, infraroten oder ultravioletten Spektralbereich (Licht) umgewandelt. Ein indirekt-wandelndes Detektorelement umfasst hierzu eine Schicht aus szintillierendem Material, das einfallende Röntgenstrahlen absorbiert und (Szintillations-) Licht emittiert. Das Szintillationslicht wird mittels eines fotoaktiven Elements, wie beispielsweise einer Fotodiode, detektiert und in ein elektrisches Signal gewandelt.

Als fotoaktive Elemente werden zunehmend organische Fotodioden eingesetzt, da die hierfür eingesetzten organischen Halbleitermaterialien das Szintillationslicht besser absorbieren als anorganische Halbleitermaterialien. Eine derartige organische Fotodiode umfasst typischerweise eine fotoaktive, organische Absorptionsschicht, die zwischen einer Elektrode und einer Gegenelektrode angeordnet ist.

Aus WO 2012/062625 A2 ist ein hybrider Aufbau für ein Detektorelement bekannt, bei dem die Szintillationsschicht und die fotoaktive Schicht zu einer gemeinsamen Hybridschicht kombiniert sind. Diese zwischen einer Elektrode und einer Gegenelektrode angeordnete Hybridschicht ist gebildet aus einer fotoaktiven Absorptionsschicht aus organischem Halbleitermaterial, in die eine Vielzahl von Szintillatorpartikeln eingebettet sind. Um eine ausreichende Röntgenabsorption zu erzielen, muss die Hybridschicht solcher Detektorelemente allerdings erfahrungsgemäß eine Mindestdicke von typischerweise etwa 100 µm aufweisen.

Eine derart dicke Absorptionsschicht erweist sich aufgrund der typischerweise geringen Ladungsträgermobilität in organischen Halbleitermaterialien jedoch als problematisch, zumal hierdurch die Ladungsträger regelmäßig lediglich in den Randbereichen der Absorptionsschicht effektiv extrahiert werden können. Dadurch kommt es im Betrieb derartiger Detektorelemente zur Ausbildung von Verarmungszonen, die das elektrische Feld zwischen der Elektrode und der Gegenelektrode zumindest teilweise abschirmen. Entsprechend verschlechtert sich die Reaktionszeit des fotoaktiven Elements, was sich nachteilig auf die Konkurrenzfähigkeit derartiger hybrider Detektorelemente in Bezug auf herkömmliche (anorganische) Detektorelemente auswirkt.

DE 10 2012 206 180 A1 schlägt beispielsweise vor, die Absorptionsschicht als "Fotoleiter" senkrecht zur flächigen Erstreckung des Strahlungsdetektors, auszubilden. Konkret durchlaufen hier mehrere Fotoleiter stabförmig oder schichtartig die Szintillationsschicht in Dickenrichtung. Im Fall von tatsächlich flächig ausgebildeten Absorptionsschichten ergibt sich hierbei also eine Art lamellarer Aufbau des Strahlungsdetektors. Dadurch sollen eine Erfassung von Szintillationslicht und eine Generierung von Ladungsträgern entstehungsnah erfolgen. Vergleichbares ist auch WO 2015/158646 A1 zu entnehmen.

Der Erfindung liegt die Aufgabe zugrunde, ein besonders geeignetes Detektorelement zur Erfassung von Röntgenstrahlung anzugeben. Des Weiteren soll ein entsprechender Röntgendetektor angegeben werden. Der Erfindung liegt ferner die Aufgabe zugrunde, ein Verfahren zur Herstellung eines derartigen Detektorelements anzugeben.

Hinsichtlich des Detektorelements wird die Aufgabe erfindungsgemäß gelöst durch die Merkmale des Anspruchs 1. Hinsichtlich eines Röntgendetektors wird die Aufgabe erfindungsgemäß gelöst durch die Merkmale des Anspruchs 8. Hinsichtlich eines Verfahrens zur Herstellung eines derartigen Detektorelements wird die Aufgabe erfindungsgemäß gelöst durch die Merkmale des Anspruchs 9. Vorteilhafte Ausgestaltungen und Weiterbildungen sind in den Unteransprüchen und der nachfolgenden Beschreibung dargelegt.

Das erfindungsgemäße Detektorelement umfasst eine Szintillationsschicht zur Wandlung von einfallender Röntgenstrahlung in Szintillationslicht (also in niederenergetische elektromagnetische Strahlung im sichtbaren, infraroten oder ultravioletten Spektralbereich). Das Detektorelement umfasst weiterhin ein fotoaktives Element zur Wandlung des Szintillationslichts in ein elektrisches Signal. Das fotoaktive Element weist eine, mit einer Elektrode kontaktierte erste fotoaktive Absorptionsschicht, sowie eine, mit einer Gegenelektrode kontaktierte zweite fotoaktive Absorptionsschicht auf. Die Szintillationsschicht ist dabei zwischen der ersten fotoaktiven Absorptionsschicht und der zweiten fotoaktiven Absorptionsschicht angeordnet.

Durch die sandwichartige Anordnung der Szintillationsschicht zwischen den beiden Absorptionsschichten wird eine vergleichsweise dünne Ausbildung der Absorptionsschichten ermöglicht, wodurch eine besonders gute Quantenausbeute und ein besonders gutes Signal-Rausch-Verhältnis bei der Detektion des Szintillationslichts erzielt werden. Durch die Anordnung der Absorptionsschichten an den gegenüberliegenden Planseiten der Szintillationsschicht wird hierbei - im Vergleich zu herkömmlichen Detektorelementen mit lediglich einer fotoaktiven Schicht - eine Verdopplung der Detektionsfläche für das Szintillationslicht erreicht, und somit eine Verdopplung der Quantenausbeute erzielt. Zur Verbesserung der Quantenausbeute und des Signal-Rausch-Verhältnisses trägt auch bei, dass bei geringen Schichtdicken die Mikrostruktur der Absorptionsschicht prozesstechnisch besonders gut kontrolliert werden kann, so dass sich qualitativ besonders hochwertige Oberflächen mit definierten Grenzflächen erzeugen lassen. Die dünnen Absorptionsschichten begünstigen weiterhin im Betrieb des Detektorelements eine geringere Bias- oder Vorspannung zwischen der Elektrode und der Gegenelektrode, wodurch der auftretende Dunkelstrom reduziert wird. Insbesondere wird auch ermöglicht, das Detektorelement in einem Photovoltaik-Modus zu betreiben, bei welchem keine Bias- oder Vorspannung angelegt wird. Dadurch wird das Signal-zu-Rausch-Verhältnis des Detektorelements weiter verbessert.

Die vorzugsweise halbleiterartigen Absorptionsschichten sind in zweckmäßiger Ausführung hinsichtlich ihres Absorptionsspektrums an das Emissionsspektrum der Szintillationsschicht angepasst, also derart ausgewählt, dass sie das Szintillationslicht möglichst vollständig absorbieren, wobei in den Absorptionsschichten elektrische Ladungen in Form von Elektron-Loch-Paaren gebildet werden. Im Betrieb des Detektionselements wird an die Elektrode und die Gegenelektrode in der Regel eine elektrische Spannung angelegt, die die gebildeten Elektronen und Löcher zur Elektrode beziehungsweise Gegenelektrode hin beschleunigen. Das dadurch generierte elektrische (Strom-) Signal stellt ein Maß für die Intensität der auf das Detektorelement auftreffenden Röntgenstrahlung dar und ist beispielsweise zur Erzeugung digitaler Bilddaten verwendbar.

In einer besonders bevorzugten Ausgestaltung der Erfindung ist mindestens eine der Absorptionsschichten aus organischem Halbleitermaterial hergestellt. Im Rahmen der Erfindung ist diese Absorptionsschicht insbesondere aus einem rein organischen Material gefertigt. Ebenso denkbar ist im Rahmen der Erfindung aber auch die Ausgestaltung mindestens einer der Absorptionsschichten als hybride Schicht (also als Absorptionsschicht, in die zusätzliche Szintillatorpartikel eingebettet sind) oder als organisch-metallisches Perowskitmaterial. Als Perowskitmaterial wird ein Stoff bezeichnet, dessen chemische Struktur typischerweise die Form ABX₃ aufweist, wobei A ein organischer Rest oder Gegenion, B ein Metall und X ein Anion aus der Gruppe der Halogenide Iod, Brom und Chlor ist. Beispielsweise wird als Perowskitmaterial Methylammonium-Blei-TriX (CH₃NH₃PbX₃) eingesetzt, mit Iod (I-), Brom (Br-) oder Chlor (Cl⁻) als dem Halogenid-Anion X. Die Absorptionsschichten sind dabei insbesondere aus einem organischen Halbleitermaterial gebildet, das auch für organische Photovoltaik geeignet ist. Organische Halbleiter haben typischerweise Absorptionskoeffizienten im Bereich von 10⁵ oder 10⁴ cm⁻¹. Somit genügen bereits sehr dünne Absorptionsschichten, die bei dem erfindungsgemäßen Röntgendetektor beispielsweise in der Grö-ßenordnung von ca. 300 nm liegen, um ausreichend viel Licht zu absorbieren. Eine solche Schichtdicke erlaubt eine effiziente Ladungsträgerextraktion, auch bei vergleichsweise niedriger Ladungsträgermobilität. Um ein möglichst gutes Signal-Rausch-Verhältnis zu erzielen, wird der mit derart dünnen Absorptionsschichten versehene Röntgendetektor vorzugsweise in dem sogenannten "Photovoltaik-Mode", d.h. ohne elektrische Vorspannung, betrieben, wodurch ein besonders niedriger Dunkelstrom oder Leckstrom erzielt wird. Alternativ kann der Röntgendetektor zur Erzielung besonders schneller Signalantworten im Rahmen der Erfindung aber auch mit elektrischer Vorspannung betrieben werden. In diesem Fall sind die Absorptionsschichten vorzugsweise stärker, insbesondere mit einer Schichtdicke im Bereich einiger Mikrometer, ausgeführt. Hierdurch wird die Anfälligkeit für Defekte in der Absorptionsschicht reduziert, die ansonsten den Dunkelstrom stark ansteigen lassen würden.

Andererseits weisen die aus organischen Halbleitermaterialien gebildeten Absorptionsschichten nur eine äußerst geringe Röntgenabsorption auf. Die Absorptionsschichten sind also im Wesentlichen transparent für die einfallende Röntgenstrahlung, wodurch die Röntgenstrahlung nahezu ungeschwächt in die Szintillationsschicht eindringen kann. Zu demselben Zweck sind die Elektrode und/oder die Gegenelektrode vorzugsweise aus röntgentransparentem Material, beispielsweise Indiumzinnoxid (ITO), einem elektrisch leitfähigen Polymer (z.B. PEDOT-PSS) oder sehr dünnen metallischen Kontakten (z.B. mit Schichtdicken im Bereich weniger Hundert Nanometer) hergestellt.

In einer vorteilhaften Ausführung der Erfindung sind die Absorptionsschichten als Bulk-Heterojunctions (BJH) ausgeführt. Unter Bulk-Heterojunction wird ein heterogenes Gemenge ("Blend") zwischen mindestens einem organischen Akzeptormaterial und mindestens einem organischen Donatormaterial verstanden, wobei sich innerhalb des kompletten Schichtvolumens ("bulk") oder zumindest eines großen Anteils desselben Grenzflächen oder Heteroübergänge zwischen den Phasen der Akzeptor- und Donatormaterialien ausbilden. Dadurch ist eine besonders große (innere) Grenzfläche zwischen den Akzeptor- und Donatormaterialen bereitgestellt. Die an dieser Grenzfläche stattfindende Trennung der Ladungsträger (Elektron-Loch-Paare) ist hierdurch in den als BJH-Schichten ausgebildeten Absorptionsschichten besonders effizient, was wiederum eine besonders flache Ausbildung der Absorptionsschichten begünstigt.

Gemäß der Erfindung ist zwischen der ersten Absorptionsschicht und der Elektrode eine erste elektrisch leitfähige Zwischenschicht angeordnet, während zwischen der zweiten Absorptionsschicht und der Gegenelektrode eine zweite elektrisch leitfähige Zwischenschicht eingebracht ist. Die erste und die zweite Zwischenschicht sind hierbei insbesondere selektiv elektrisch leitfähig für Ladungsträger unterschiedlicher elektrischer Ladungspolarität (insbesondere Elektronen und Löcher). Die in geeigneter Ausführung aus hochdotiertem anorganischem Halbleitermaterial hergestellten Zwischenschichten sind insbesondere selektiv elektronenleitend bzw. selektiv lochleitend, und verhindern somit eine Injektion der jeweiligen Minoritätsladungsträger aus den Absorptionsschichten in die Elektrode beziehungsweise Gegenelektrode. Dadurch wird der Leckstrom (Dunkelstrom) im Betrieb des Detektorelements reduziert.

In vorteilhafter Ausgestaltung ist die Szintillationsschicht durch eine - für das Szintillationslicht - optisch transparente Matrix gebildet, in die eine Vielzahl von Szintillatorpartikeln eingebettet sind. Durch die Szintillatorpartikel wird einerseits ein hoher effektiver Absorptionsquerschnitt für die einfallende Röntgenstrahlung erzielt. Andererseits wird aber das emittierte Szintillationslicht in der Szintillationsschicht in lediglich vernachlässigbarem Umfang geschwächt, was die Quantenausbeute des Detektorelements weiter begünstigt. Hinzu kommt, dass die transparente Matrix durch die darin eingebetteten Szintillatorpartikel viele Streuzentren für das emittierte Szintillationslicht aufweist. Hierdurch wird eine laterale Ausbreitung des Szintillationslichts innerhalb der Szintillationsschicht unterdrückt. Dies ist insbesondere bei einem Röntgendetektor mit mehreren benachbart angeordneten Detektorelementen vorteilhaft, da hierdurch das optische Übersprechen der benachbarten Detektorelemente minimiert wird.

In einer zweckmäßigen Weiterbildung weist die Matrix einen optischen Brechungsindex auf, der an die Wellenlänge des Szintillationslichts angepasst ist. Die Brechungsindizes des Matrixmaterials und des Materials der Szintillatorpartikel sind hierbei aneinander möglichst angeglichen. Dadurch wird die Lichtauskopplung des Szintillationslichts aus den Szintillatorpartikeln in die Matrix verbessert, was der Sensitivität des Detektorelements zuträglich ist. Zur Anpassung des Brechungsindex des Matrixmaterials an die Wellenlänge des Szintillationslichts wird beispielsweise das Matrixmaterial mit nanoskopischen Partikeln aus einem Metalloxid, beispielsweise Titanoxid, versehen. Als nanoskopische Partikel werden dabei Partikel mit typischen Partikeldurchmessern im Nanometerbereich verstanden, die somit klein gegen die Wellenlänge des emittierten Szintillationslichts sind, und die mithin keine Streuung des Szintillationslichts hervorrufen. Als Szintillatormaterial wird beispielsweise ein Terbiumdotiertes Gadolinium Oxylsulfid eingesetzt, das ein Emissionsmaximum im grünen Spektralbereich hat. Als Matrixmaterial wird hierbei beispielsweise PMMA, ein Epoxidharz oder Silikon eingesetzt, da diese Stoffe in dem genannten Spektralbereich eine vergleichsweise geringe Absorption aufweisen. Die Schichtdicke der Szintillationsschicht ist zweckmäßigerweise derart gewählt, dass sich sowohl für die Röntgenabsorption als auch für die Lichtauskopplung und ggf. für die Leitfähigkeit der Matrix hinreichend gute Werte ergeben. Typischerweise hat die Szintillationsschicht hierbei eine Schichtdicke im Bereich von mehreren Mikrometern.

In einer besonders vorteilhaften Weiterbildung ist die Matrix elektrisch ambipolar leitfähig. Das sandwichartig aufgebaute Detektorelement wirkt in dieser Weiterbildung wie zwei in Serie geschaltete Fotodioden. Durch die elektrische Leitfähigkeit der Matrix wird eine kapazitive Aufladung des Detektorelements in dessen Betrieb und eine dadurch verursachte Verlangsamung der Detektorantwort vermieden. Das Matrixmaterial wirkt hierbei als Rekombinationsschicht für die nicht extrahierten Ladungsträger. Dadurch ist im Betrieb des Detektorelements auch unter kontinuierlicher Beaufschlagung mit Röntgenstrahlung eine dauerhaft effiziente Extraktion von Ladungsträgern möglich.

Wiederum alternativ hierzu ist die Matrix fotoleitend ausgeführt. In unbestrahltem Zustand ist die Matrix in diesem Fall elektrisch isolierend, so dass nur ein geringer oder sogar verschwindender Dunkelstrom fließt. Erst unter Röntgenbestrahlung wird das Matrixmaterial (vorzugsweise ambipolar) elektrisch leitfähig und ermöglicht somit die Ladungsträgerrekombination aus den beiden photoaktiven Elementen. Des Weiteren werden in der Matrix hierbei weitere Ladungsträger erzeugt, die unter bestimmten Umständen auch zum Messsignal des Röntgendetektors beitragen können. Somit wird durch die fotoleitende Ausführung der Matrix ein besonders guter Signal-Rausch-Abstand des Röntgendetektors erzielt.

In der bevorzugten Anwendung werden zur Bildung des erfindungsgemäßen Röntgendetektors mehrere Detektorelemente der vorstehend beschriebenen Art in einer vorgegebenen geometrischen Anordnung zueinander fixiert. Die einzelnen Detektorelemente oder Detektorpixel sind dabei insbesondere zur Bildung eines ortsaufgelöst detektierenden Röntgendetektors in einer eindimensionalen Detektorzeile oder einem zweidimensionalen Detektorarray angeordnet. Im Rahmen des Röntgendetektors sind die einzelnen Detektorelemente vorzugsweise untereinander signaltechnisch gekoppelt. Insbesondere werden die elektrischen Signale mehrerer oder aller Detektorelemente des Röntgendetektors durch eine gemeinsame Steuer- oder Auswerteeinheit verarbeitet und geregelt.

Der Röntgendetektor wird beispielsweise in der Medizintechnik, insbesondere als Bestandteil eines Computertomographen eingesetzt. Weiterhin wird ein solcher Röntgendetektor beispielsweise auch als Strahlungsmonitor, d.h. als Messgerät zur Messung der Röntgendosisleistung und somit der Strahlenbelastung für einen der Röntgenstrahlung ausgesetzten Patienten eingesetzt.

Der Einsatz des mit organischen Absorptionsschichten der Detektorpixel versehenen Röntgendetektors als Strahlungsmonitor ist dabei besonders vorteilhaft, da infolge der - in diesem Fall röntgentransparenten - Absorptionsschichten die Strahlenbelastung des Patienten hochauflösend überwacht werden kann, ohne dass dabei unerwünschte Abschattungseffekte auf dem eigentlichen Röntgenbild auftreten. Für die Anwendung als Strahlungsmonitor ist der Füllgrad der Szintillationsschicht (das heißt die Anzahl und Dichte der Szintillatorpartikel innerhalb der Matrix) vorzugsweise hinreichend groß gewählt, dass die Detektorpixel des Strahlungsmonitors auch bei einer geringen Röntgendosis zuverlässig ein ausreichend hohes und rauscharmes Signal generieren. Andererseits ist der Füllgrad vorzugsweise hinreichend klein gewählt, dass durch die Detektorelemente des Strahlungsmonitors keine (Röntgen-)Schatten auf einem nachgeschalteten bildgebenden Detektor, und somit auf dem Röntgenbild erzeugt werden.

Zur Herstellung des erfindungsgemäßen Detektorelements ist verfahrensgemäß vorgesehen, dass die Szintillationsschicht aus einer flüssigen Dispersion oder Suspension von Szintillatorpartikeln und einem Polymermaterial hergestellt wird. Dadurch kann die Szintillationsschicht aus der flüssigen Dispersion heraus prozessiert und danach getrocknet beziehungsweise gehärtet werden.

In einer bevorzugten Weiterbildung des Verfahrens werden die fotoaktiven Absorptionsschichten aus einer Lösung heraus direkt auf gegenüberliegende Planseiten der Szintillationsschicht aufgetragen. Durch die Prozessierung der Absorptionsschichten direkt aus einer Lösung heraus wird eine besonders effektive und flächige optische Kopplung zwischen der Matrix und dem Material der Absorptionsschichten sichergestellt.

Nachfolgend werden Ausführungsbeispiele der Erfindung anhand einer Zeichnung näher erläutert. Darin zeigen
- Fig. 1: in einer schematischen Schnittdarstellung ein schichtartig aufgebautes Detektorelement zur Erfassung einfallender Röntgenstrahlung, und
- Fig. 2: in Darstellung gemäß Fig. 1 eine Variante des Detektorelements.

Einander entsprechende Teile und Größen sind in den Figuren stets mit gleichen Bezugszeichen versehen.

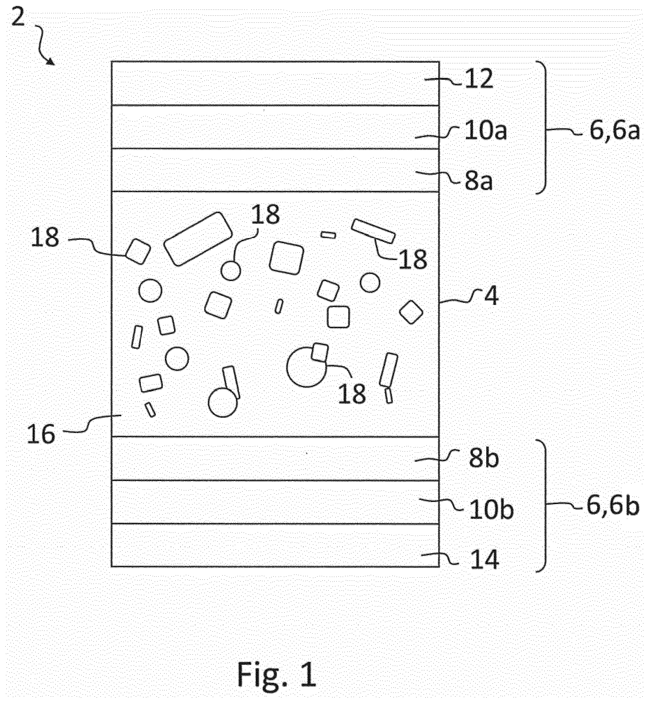

Das in Fig. 1 dargestellte Detektorelement 2 ist für eine indirekte Röntgendetektion von einfallender Röntgenstrahlung besonders geeignet und eingerichtet. Hierzu umfasst das Detektorelement 2 eine Szintillationsschicht 4 zur Wandlung der Röntgenstrahlung in Szintillationslicht mit einer Wellenlänge im sichtbaren, infraroten oder ultravioletten Spektralbereich. Weiterhin umfasst das Detektorelement 2 ein fotoaktives Element 6, durch das das Szintillationslicht anschließend zur Wandlung in ein elektrisches Signal absorbiert wird.

Das fotoaktive Element 6 ist durch zwei Fotodioden 6a, 6b gebildet. Jeweils eine der beiden Fotodioden 6a, 6b ist dabei zur Erfassung des generierten Szintillationslichts an einer der beiden Planseiten der Szintillationsschicht 4 angeordnet, so dass die Szintillationsschicht 4 sandwichartig zwischen den beiden Fotodioden 6a, 6b aufgenommen ist. Jede der beiden Fotodioden 6a, 6b umfasst jeweils eine Absorptionsschicht 8a bzw. 8b, in der das Szintillationslicht unter Bildung von Elektron-Loch-Paaren absorbierbar ist.

An jede der Absorptionsschichten 8a, 8b grenzt jeweils außenseitig eine Zwischenschicht 10a bzw. 10b an, mittels der die jeweilige Absorptionsschicht 8a, 8b elektrisch leitfähig mit einer Elektrode 12 beziehungsweise einer Gegenelektrode 14 gekoppelt ist.

Die Fotodiode 6a ist somit aus der Absorptionsschicht 8a, der Zwischenschicht 10a und der Elektrode 12 gebildet, wohingegen die Fotodiode 6b aus der Absorptionsschicht 8b, der Zwischenschicht 10b sowie der Gegenelektrode 14 gebildet ist.

Die Szintillationsschicht 4 ist durch eine Matrix 16 aus einem Polymer gebildet, in die eine Vielzahl an Szintillatorpartikeln 18 eingebettet sind.

Die Szintillatorpartikel 18 absorbieren einfallende Röntgenstrahlung und wandeln diese in das Szintillationslicht um. Die Matrix 16 ist für die einfallende Röntgenstrahlung sowie das emittierte Szintillationslicht transparent. Die Matrix 16 ist weiterhin hinsichtlich des optischen Brechungsindex an die Szintillatorpartikel 18 angepasst, so dass eine besonders effektive optische Auskopplung des Szintillationslichts in die Matrix 16 realisiert ist.

Die Matrix 16 ist weiterhin ambipolar elektrisch leitend. In einem alternativen Ausführungsbeispiel ist die Matrix 16 fotoleitend. In diesem Fall ist die Matrix 16 nur in Anwesenheit von Szintillationslicht elektrisch leitfähig, während sie in Abwesenheit von Szintillationslicht elektrisch nichtleitend ist und die Absorptionsschichten 8a,8b somit gegeneinander isoliert.

Die Szintillatorpartikel 18 weisen vorzugsweise einen Durchmesser im Bereich der Wellenlänge des Szintillationslichts auf. Dadurch wirken die Szintillatorpartikel 18 als Streuzentren für das Szintillationslicht, wodurch die laterale Transmission des Szintillationslichts innerhalb der Szintillationsschicht 4 unterdrückt wird. Das Szintillationslicht wird somit vorrangig über die Planseiten der Szintillationsschicht 4 in die Fotodioden 6a und 6b eingekoppelt.

Die Szintillationsschicht 4 wird aus einer flüssigen Dispersion der Szintillatorpartikel 18 und des Matrixpolymers durch Trocknen und Erhärten hergestellt. Die Absorptionsschichten 8a, 8b werden danach aus einer Flüssigkeit heraus direkt auf die Szintillationsschicht 4 aufgebracht. Dadurch wird eine besonders effektive optische Kopplung zwischen der Szintillationsschicht 4 und den Absorptionsschichten 8a und 8b erreicht.

Die Absorptionsschichten 8a und 8b sind aus einem fotoaktiven organischen Halbleitermaterial. Die Absorptionsschichten 8a und 8b sind dabei als Bulk-Heterojunctions ausgeführt.

Die Zwischenschichten 10a, 10b sind aus hochdotiertem Halbleitermaterial gefertigt. Die Dotierung der Zwischenschichten 10a, 10b ist hierbei derart gewählt, dass die Zwischenschicht 10a elektrisch selektiv leitfähig für Elektronen ist, während die Zwischenschicht 10b elektrisch selektiv für Löcher leitfähig ist. Dadurch sind die Absorptionsschichten 8a und 8b komplementär selektiv in Bezug auf die Ladungspolarität mit der Elektrode 12 bzw. der Gegenelektrode 14 kontaktiert.

Im Betrieb des Detektorelements 2 wird zwischen der Elektrode 12 und der Gegenelektrode 14 eine elektrische Spannung angelegt, wobei die Elektrode 12 insbesondere an einen Pluspol, und die Gegenelektrode 14 insbesondere an einen Minuspol einer Spannungsquelle angeschlossen werden. Einfallende Röntgenstrahlung induziert das Szintillationslicht innerhalb der Szintillationsschicht 4, das von den Absorptionsschichten 8a und 8b unter Bildung von Ladungsträgern (Elektron-Loch-Paaren) absorbiert wird.

Durch das elektrische Feld zwischen der Elektrode 12 und der Gegenelektrode 14 werden die gebildeten Ladungsträger getrennt. Aufgrund der Zwischenschichten 10a und 10b werden Elektronen zur Elektrode 12 und Löcher zur Gegenelektrode 14 hin beschleunigt und dort extrahiert. Die jeweiligen Minoritätsladungsträger, das heißt Löcher bezüglich der Fotodiode 6a und Elektronen bezüglich der Fotodiode 6b, bleiben hierbei in den Absorptionsschichten 8a und 8b zurück.

Durch Ladungsaustausch über die elektrisch leitfähige Matrix 16 können die Minoritätsladungsträger miteinander rekombinieren. Dadurch wird ein kapazitives Aufladen des Detektorelements 2 verhindert, sodass eine kontinuierliche Extraktion der Ladungsträger unter Röntgenbestrahlung ermöglicht ist.

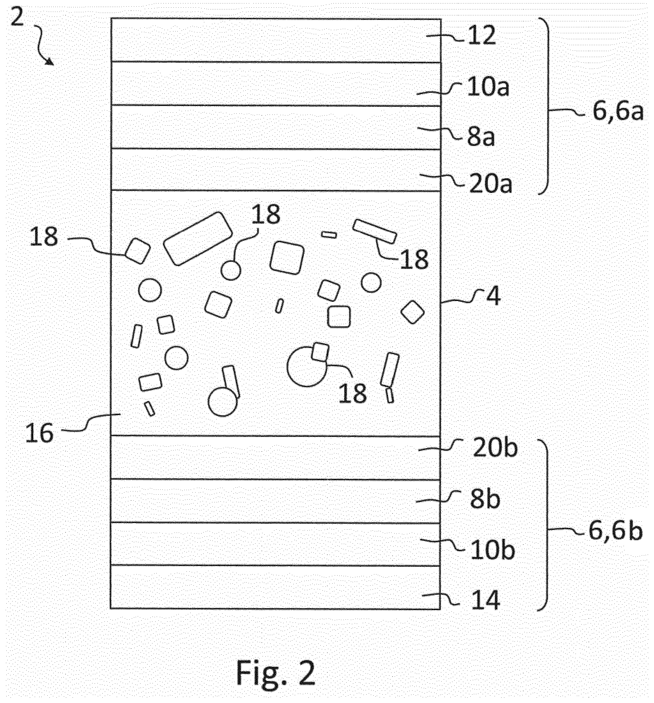

Fig. 2 zeigt das Detektorelement 2 in einer weiteren Ausführungsform. Das Detektorelement 2 gemäß Fig. 2 entspricht hierbei - soweit nicht im Folgenden abweichend beschrieben - der vorstehend beschriebenen Ausführungsform. Allerdings sind abweichend von der letzteren zwei weitere Zwischenschichten 20a und 20b vorhanden, die jeweils unmittelbar an die Szintillationsschicht 4 angrenzen. Die Zwischenschicht 20a ist somit zwischen der Szintillationsschicht 4 und der Absorptionsschicht 8a angeordnet, während die Zwischenschicht 20b zwischen der Szintillationsschicht 4 und der Absorptionsschicht 8b angeordnet ist. Bei den Zwischenschichten 20a und 20b handelt es sich um Halbleiterschichten, die hinsichtlich ihrer selektiven Leitfähigkeit komplementär zu den jeweils zugeordneten Zwischenschichten 10a bzw. 10b sind. Durch die weiteren Zwischenschichten 20a, 20b wird - im Vergleich zu der Ausführungsform gemäß Fig. 1 - die elektrische Anbindung an die Szintillationsschicht 4 verbessert. Des Weiteren werden Unebenheiten an der Oberfläche der Szintillationsschicht 4 durch die weiteren Zwischenschichten 20a, 20b ausgeglichen. Die Funktionsweise des Detektorelements 2 wird durch die Zwischenschichten 20a und 20b im Übrigen nicht beeinflusst, so dass diesbezüglich auf die vorstehenden Ausführungen zu Fig. 1 verwiesen wird.

Alle Schichten des Detektorelements 2 gemäß Fig. 1 oder 2 werden vorzugsweise aus einer Lösung, Suspension oder Paste hergestellt, insbesondere mittels Siebdruck, Rakeln, oder einer Sprühbeschichtung. Es ist dabei darauf zu achten, dass das Lösemittel der aktuell hergestellten Schicht die darunterliegende nicht an- oder auflöst.

In einer zweckmäßigen Ausführung des Herstellungsverfahrens wird mit einem Glassubstrat begonnen, das schon mit einer als Gegenelektrode 14 wirkenden Schicht aus ITO besputtert wurde. Darauf werden mit einer Rakel oder einem Schlitz-Düsen-Beschichter die ersten drei Schichten in folgender Reihenfolge aufgebracht:
- als Zwischenschicht 10b eine lochleitende Schicht aus PEDOT mit einer Schichtdicke zwischen 30 nm und 100nm,
- als Absorptionsschicht 8b eine photoaktive Schicht (BHJ) aus Poly-3-hexylthiophen (P3HT) und Phenyl-C61-Buttersäuremethylester (PCBM) oder reinem Perowskit mit einer Schichtdicke zwischen 100 nm und 1000 nm, sowie
- optional als Zwischenschicht 20b eine elektronenleitende Schicht aus Zinkoxid Nanopartikeln mit einer Schichtdicke <50nm.

Darauf wird, ebenfalls beispielsweise durch Rakeln, die Szintillationsschicht 4 mit einer Schichtdicke zwischen 2 µm und 6 µm aufgetragen. Die Szintillationsschicht 4 wird anschließend getrocknet oder gehärtet (vorzugsweise durch eine UV aktivierte Härtung). In einer alternativen Verfahrensvariante wird die Szintillationsschicht 4 als fertige Schicht auflaminiert.

Auf diesen Schichtstapel werden, ebenfalls mit einer Rakel oder einem Schlitz-Düsen-Beschichter, folgende Schichten aufgetragen:
- optional als Zwischenschicht 20a eine lochleitende Schicht aus PEDOT mit einer Schichtdicke <50nm,
- als Absorptionsschicht 8a eine weitere photoaktive Schicht aus P3HT:PCBM mit einer Schichtdicke <1000nm, vorzugsweise zwischen 100 nm und 300 nm, sowie
- als Zwischenschicht 10a eine elektronenleitende Schicht aus ZnO Nanopartikeln mit einer Schichtdicke <50nm.

Als abschließende Elektrode (12) wird eine Metallschicht (Al oder Ag) mit einer Schichtdicke von etwa 100 nm thermisch aufgedampft. Alternativ hierzu wird die Elektrode (12) aus einer Schicht aus Silbernanodrähten hergestellt, die aus einer Tinte heraus aufgebracht werden. Vorzugweise werden hierbei wenige (insbesondere etwa 2 bis 5) Monolagen aufgebracht.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen.

## Patentansprüche

1. Detektorelement (2) zur Erfassung von einfallender Röntgenstrahlung mit einer Szintillationsschicht (4) zur Wandlung der Röntgenstrahlung in Szintillationslicht und mit einem fotoaktiven Element (6) zur Wandlung des Szintillationslichts in ein elektrisches Signal, wobei das fotoaktive Element (6) zwei Fotodioden (6a,6b) umfasst, die jeweils an einer der beiden Planseiten der Szintillationsschicht (4) angeordnet sind,
- wobei eine der Fotodioden (6a) eine mit einer Elektrode (12) kontaktierte erste fotoaktive Absorptionsschicht (8a) sowie die andere der Fotodioden (6b) eine mit einer Gegenelektrode (14) kontaktierte zweite fotoaktive Absorptionsschicht (8b) umfasst,
- wobei die eine Fotodiode (6a) eine erste elektrisch leitfähige Zwischenschicht (10a) umfasst, wobei die andere Fotodiode (6b) eine zweite elektrisch leitfähige Zwischenschicht (10b) umfasst, wobei die jeweilige Zwischenschicht (10a, 10b) außenseitig an die jeweilige Absorptionsschicht (8a,8b) angrenzend angeordnet ist und wobei die jeweilige Absorptionsschicht (8a,8b) mittels der jeweiligen Zwischenschicht (10a, 10b) elektrisch leitfähig mit der Elektrode (12) beziehungsweise der Gegenelektrode (14) gekoppelt ist,
- wobei die Szintillationsschicht (4) sandwichartig zwischen den beiden Fotodioden (6a,6b) aufgenommen ist, wobei die Szintillationsschicht (4) zwischen der ersten fotoaktiven Absorptionsschicht (8a) und der zweiten fotoaktiven Absorptionsschicht (8b) angeordnet ist.

2. Detektorelement (2) nach Anspruch 1,
wobei mindestens eine der Absorptionsschichten (8a, 8b) aus organischem Halbleitermaterial hergestellt ist.

3. Detektorelement (2) nach Anspruch 1 oder 2,
wobei mindestens eine der Absorptionsschichten (8a, 8b) als Bulk-Heterojunctions ausgeführt ist.

4. Detektorelement (2) nach einem der Ansprüche 1 bis 3,
wobei die erste elektrisch leitfähige Zwischenschicht (10a) zwischen der ersten Absorptionsschicht (8a) und der Elektrode (12) angeordnet ist, wobei die zweite elektrisch leitfähige Zwischenschicht (10b) zwischen der zweiten Absorptionsschicht (8b) und der Gegenelektrode (14) angeordnet ist, wobei die erste und die zweite Zwischenschicht (10a, 10b) elektrisch leitfähig für Ladungsträger unterschiedlicher Ladungspolarität sind.

5. Detektorelement (2) nach einem der Ansprüche 1 bis 4, wobei die Szintillationsschicht (4) durch eine optisch transparente Matrix (16) gebildet ist, in der eine Vielzahl von Szintillatorpartikeln (18) eingebettet sind.

6. Detektorelement (2) nach Anspruch 5,
wobei die Matrix (16) einen optischen Brechungsindex aufweist, der an die Wellenlänge der Szintillationsstrahlung angepasst ist.

7. Detektorelement (2) nach Anspruch 5 oder 6,
wobei die Matrix (16) elektrisch ambipolar leitfähig ist.

8. Röntgendetektor, umfassend mehrere Detektorelemente (2) nach einem der Ansprüche 1 bis 7, die in einer vorgegebenen geometrischen Anordnung zueinander fixiert sind.

9. Verfahren zur Herstellung eines Detektorelements (2) nach einem der Ansprüche 1 bis 7, bei welchem die Szintillationsschicht (4) aus einer flüssigen Dispersion von Szintillatorpartikeln (18) und einem Polymermaterial hergestellt wird.

10. Verfahren nach Anspruch 9,
wobei die fotoaktiven Absorptionsschichten (8a, 8b) aus einer Lösung heraus direkt auf gegenüberliegende Planseiten der Szintillationsschicht (4) aufgetragen werden.

## Claims

1. Detector element (2) for detecting incident x-ray radiation, said detector element (2) comprising a scintillation layer (4) for converting the x-ray radiation into scintillation light and a photoactive element (6) for converting the scintillation light into an electrical signal, wherein the photoactive element (6) comprises two photodiodes (6a,6b), which in each case are arranged on one of the two plane faces of the scintillation layer (4),
- wherein one of the photodiodes (6a) comprises a first photoactive absorption layer (8a) contacted by an electrode (12) and the other of the photodiodes (6b) comprises a second photoactive absorption layer (8b) contacted by a counter electrode (14),
- wherein the one photodiode (6a) comprises a first electrically conductive intermediate layer (10a), wherein the other photodiode (6b) comprises a second electrically conductive intermediate layer (10b), wherein the respective intermediate layer (10a, 10b) is arranged such that it adjoins the respective absorption layer (8a,8b) on the outside face and wherein the respective absorption layer (8a,8b) is coupled in an electrically conductive manner to the electrode (12) and the counter electrode (14), respectively, by means of the respective intermediate layer (10a, 10b),
- wherein the scintillation layer (4) is accommodated in a sandwich-like manner between the two photodiodes (6a,6b), wherein the scintillation layer (4) is arranged between the first photoactive absorption layer (8a) and the second photoactive absorption layer (8b).

2. Detector element (2) according to claim 1,
wherein at least one of the absorption layers (8a, 8b) is produced from organic semiconductor material.

3. Detector element (2) according to claim 1 or 2,
wherein at least one of the absorption layers (8a, 8b) is embodied as a bulk heterojunction.

4. Detector element (2) according to one of claims 1 to 3, wherein the first electrically conductive intermediate layer (10a) is arranged between the first absorption layer (8a) and the electrode (12), wherein the second electrically conductive intermediate layer (10b) is arranged between the second absorption layer (8b) and the counter electrode (14), wherein the first and the second intermediate layer (10a, 10b) are electrically conductive for charge carriers of different charge polarity.

5. Detector element (2) according to one of claims 1 to 4, wherein the scintillation layer (4) is formed by an optically transparent matrix (16) in which a plurality of scintillator particles (18) are embedded.

6. Detector element (2) according to claim 5,
wherein the matrix (16) has an optical refractive index which is matched to the wavelength of the scintillation radiation.

7. Detector element (2) according to claim 5 or 6,
wherein the matrix (16) is electrically conductive in an ambipolar manner.

8. X-ray detector comprising a plurality of detector elements (2) according to one of claims 1 to 7, which are fixed in a predefined geometric arrangement in relation to one another.

9. Method for producing a detector element (2) according to one of claims 1 to 7, in which the scintillation layer (4) is produced from a liquid dispersion of scintillator particles (18) and a polymer material.

10. Method according to claim 9,
wherein the photoactive absorption layers (8a, 8b) are deposited out of a solution directly onto opposite plane faces of the scintillation layer (4).

## Revendications

1. Elément (2) détecteur de détection de rayonnement X incident ayant une couche (4) de scintillation de transformation du rayonnement X en de la lumière de scintillation et ayant un élément (6) photo-actif de transformation de la couche de scintillation en un signal électrique, dans lequel l'élément (6) photo-actif comprend deux photodiodes (6a, 6b), qui sont disposées respectivement sur l'une des deux faces planes de la couche (4) de scintillation,
- dans lequel l'une des photodiodes (6a) comprend une première couche (8a) d'absorption photo active en contact avec une électrode (12), tandis que l'autre des photodiodes (6b) comprend une deuxième couche (8b) d'absorption photo-active en contact avec une électrode (14) antagoniste,
- dans lequel la une photodiode (6a) comprend une première couche (10a) intermédiaire conductrice de l'électricité, dans lequel l'autre photodiode (6b) comprend une deuxième couche (10b) intermédiaire conductrice de l'électricité, dans lequel la couche (10a, 10b) intermédiaire respective est disposée du côté extérieur au voisinage de la couche (8a, 8b) d'absorption respective et dans lequel la couche (8a, 8b) d'absorption respective est couplée au moyen de la couche (10a, 10b) intermédiaire respective d'une manière conductrice de l'électricité à l'électrode (12) et respectivement à l'électrode (14) antagoniste,
- dans lequel la couche (4) de scintillation est prise en sandwich entre les deux photodiodes (6a, 6b), la couche (4) de scintillation étant disposée entre la première couche (8a) d'absorption photo-active et la deuxième (8b) d'absorption photo-active.

2. Elément (2) détecteur suivant la revendication 1,
dans lequel au moins l'une des couches (8a, 8b) d'absorption est en un matériau semi-conducteur organique.

3. Elément (2) détecteur suivant la revendication 1 ou 2,
dans lequel au moins l'une des couches (8a, 8b) d'absorption est réalisée sous la forme d'une hétérojonction bulk.

4. Elément (2) détecteur suivant l'une des revendications 1 à 3, dans lequel la première couche (10a) intermédiaire conductrice de l'électricité est disposée entre la première couche (8a) d'absorption et l'électrode (12), tandis que la deuxième couche (10b) intermédiaire conductrice de l'électricité est disposée entre la deuxième couche (8b) d'absorption et l'électrode (14) antagoniste, la première et la deuxième couche (10a, 10b) intermédiaires étant conductrices de l'électricité pour des porteurs de charge de polarité de charge différente.

5. Elément (2) détecteur suivant l'une des revendications 1 à 4, dans lequel la couche (4) de scintillation est formée d'une matrice (16) transparente optiquement, dans laquelle sont incorporées une pluralité de particules (18) de scintillateur.

6. Elément (2) détecteur suivant la revendication 5,
dans lequel la matrice (16) a un indice de réfraction optique, qui est adapté à la longueur d'onde du rayonnement de scintillation.

7. Elément (2) détecteur suivant la revendication 5 ou 6,
dans lequel la matrice (16) est conductrice ambipolaire de l'électricité.

8. Détecteur de rayon X comprenant plusieurs éléments (2) détecteurs suivant l'une des revendications 1 à 7, qui sont immobilisés les uns par rapport aux autres suivant un agencement géométrique donné à l'avance.

9. Procédé de fabrication d'un élément (2) détecteur suivant l'une des revendications 1 à 7, dans lequel on produit la couche (4) de scintillation à partir d'une dispersion liquide de particules (18) de scintillateur et d'une matière polymère.

10. Procédé suivant la revendication 9,
dans lequel on dépose les couches (8a, 8b) d'absorption photoactives en une solution directement sur des faces planes opposées de la couche (4) de scintillation.
